# EUROPÄISCHE PATENTSCHRIFT

(11) **EP 2 805 403 B1**
(45) Veröffentlichungstag und Bekanntmachung des Hinweises auf die Patenterteilung: **16.06.2021**
(21) Anmeldenummer: 13709819.0
(22) Anmeldetag: 01.03.2013
(51) Int. Cl.: H02K 1/32, H02K 9/20, H02K 9/22

(54) **KÜHLEINRICHTUNG FÜR EINEN ROTOR EINER ELEKTRISCHEN MASCHINE**
COOLING DEVICE FOR A ROTOR OF AN ELECTRIC MACHINE
DISPOSITIF DE REFROIDISSEMENT POUR ROTOR D'UN MOTEUR ÉLECTRIQUE

(30) Priorität: 08.03.2012 DE 102012203691
(43) Veröffentlichungstag der Anmeldung: 26.11.2014
(73) Patentinhaber: Siemens Aktiengesellschaft, 80333 München (DE)
(72) Erfinder: WÖHNER, Norbert, 97618 Heustreu (DE)
(86) Internationale Anmeldenummer: PCT/EP2013/054195
(87) Internationale Veröffentlichungsnummer: WO 2013/131825

(56) Entgegenhaltungen:
- JP-A- H0 974 716
- JP-A- H08 243 878
- JP-A- 2007 043 817
- US-B1- 6 191 511
- None

## Beschreibung

Die vorliegende Erfindung betrifft eine elektrische Maschine mit einem Stator, einem Rotor, einer Welle, die mit dem Rotor mechanisch verbunden ist und eine Kühleinrichtung, die in der Welle angeordnet ist. Überdies betrifft die vorliegende Erfindung eine Maschinenanordnung.

Beim Betrieb von elektrischen Maschinen entstehen im Rotor infolge des ohmschen Widerstands Verluste. Diese Verluste führen zur Erwärmung des Rotors. Diese Verlustwärme muss nach außen abgeführt werden, da zu hohe Temperaturen in der elektrischen Maschine üblicherweise zu einem geringeren Wirkungsgrad bzw. zu einer Leistungsbegrenzung führen. Überdies kann die elektrische Maschine infolge der Überhitzung beschädigt werden.

Bei elektrischen Maschinen gemäß dem Stand der Technik fließt ein Teil der Verlustwärme über die Motorwelle nach außen. Nachteilig ist hierbei, dass insbesondere die Innenringe des Kugellagers, mit dem der Rotor gelagert ist, erwärmt werden. Der andere Teil der Verlustwärme wird über den Luftspalt zwischen Rotor und Stator an das Statorpaket abgegeben und von dort an das Gehäuse der elektrischen Maschine weitergeleitet. Methoden zur Verbesserung der Wärmeabfuhr in elektrischen Maschinen sind hinlänglich bekannt. So werden beispielsweise Innenkühlkreisläufe in der elektrischen Maschine verwendet, um die im Rotor entstehende Wärme besser abführen zu können. Zu diesem Zweck kann der Rotor der elektrischen Maschine entsprechende Bohrungen aufweisen, durch die Luft geleitet wird.

Alternativ dazu kann auch direkt die Welle der elektrischen Maschine gekühlt werden. Zu diesem Zweck können beispielsweise Thermosiphons oder Heatpipes in der Welle vorgesehen sein. Eine solche Heatpipe bzw. ein Wärmerohr ist mit einem Kühlmedium gefüllt. Infolge der Erwärmung verdampft das Kühlmedium.

Das verdampfte Kühlmedium gibt seine Wärmeenergie an einen entsprechenden Kühlkörper ab wodurch es wieder kondensiert. Das abgekühlte Kondensat fließt dabei wieder an den Wänden der Heatpipe in Richtung der Wärmequelle. Dabei ist die Heatpipe oder der Thermosiphon drehfest mit der elektrischen Maschine verbunden. Somit wird der Transport des verdampften Kühlmediums in Richtung der Wände infolge der Fliehkräfte begünstigt. Nachteilig ist hierbei allerdings, dass bei einer derartigen Kühleinrichtung, die sich mit der Welle mitdreht, aufwändige Dichtungen vorgesehen werden müssen, um die Kühleinrichtung entsprechend abzudichten.

Hierzu beschreibt die JP 2007 043817 A eine Vorrichtung zum Kühlen eines Rotors einer elektrischen Maschine. In der Welle des Rotors ist eine Aussparung vorgesehen, in welche ein Rohr eingebracht ist. Eine Kühlflüssigkeit wird durch das Rohr geführt. Die Kühlflüssigkeit tritt an einem Ende des Rohrs aus und wird am Außenumfang des Rohrs in entgegengesetzte Richtung aus der Aussparung heraus geführt.

Weiterhin beschreibt die JP H08 243878 einen Motor mit einer Drehwelle eines Rotors, die hohl ausgebildet ist. In dem hohlen Teil der Welle ist eine Flüssigkeitsversorgungsleitung angeordnet, die an einem offenen Ende mit einer Versorgungspumpe versehen ist. Weiterhin ist die Flüssigkeitsversorgungsleitung mit einem offenen Ende ausgestattet, sodass eine Kühlflüssigkeit, die durch die Flüssigkeitsversorgungsleitung gepumpt wird, durch diese in die drehbare Welle dringen kann. Zudem ist ein Rückflussweg ausgebildet, der die Kühlflüssigkeit durch Rotation des Rotors wieder in Richtung der Versorgungspumpe treibt.

Weiterhin ist in der JP H09 74716 A eine Rotorwelle einer elektrischen Maschine beschrieben, in die eine Heatpipe eingebracht ist. Ein Teil dieser Heatpipe ragt in die Rotorwelle hinein. Der andere Teil der Heatpipe ist so angeordnet, dass er aus dem Rotorschaft herausragt. Der aus der elektrischen Maschine herausstehende Teil wird dann mit einer Kühlflüssigkeit umspült und somit gekühlt.

Zudem beschreibt die US 6 191 511 B1 eine Asynchronmaschine, die einen Stator, der eine Tragestruktur mit einer Leitung und einer Hülle umfasst, und einen Rotor, der innerhalb des Stators angeordnet ist und der eine hohle Welle aufweist, umfasst. Die Asynchronmaschine weist einen geschlossenen Kühlkreislauf auf, der über die Leitung versorgt ist und sich in dem Hohlraum des Stators im Wesentlichen über die gesamte Länge des Stators erstreckt. Zudem ist eine Pumpe, die zur Zirkulation einer Flüssigkeit des Kühlkreislaufs dient, innerhalb des Rotors in der Welle angeordnet.

Daher ist es Aufgabe der vorliegenden Erfindung, einen Weg aufzuzeigen, wie die Welle einer elektrischen Maschine besonders einfach und effektiv gekühlt werden kann.

Diese Aufgabe wird durch eine elektrische Maschine gemäß Patentanspruch 1 und durch eine Maschinenanordnung gemäß Patentanspruch 6 gelöst. Vorteilhafte Weiterbildungen der vorliegenden Erfindung sind in den Unteransprüchen angegeben.

Die erfindungsgemäße elektrische Maschine umfasst einen Stator, einen Rotor, eine Welle, die mit dem Rotor mechanisch verbunden ist, und eine Kühleinrichtung die in der Welle angeordnet ist, wobei die Welle eine Aussparung aufweist, in der die Kühleinrichtung angeordnet ist und wobei die Welle drehbar zu der Kühleinrichtung ausgebildet ist. Die Kühleinrichtung ist in diesem Fall derart ausgebildet, dass sie sich im Betrieb der elektrischen Maschine nicht mit der Welle mitdreht. Mit anderen Worten ist die Kühleinrichtung feststehend in Bezug zur Welle ausgebildet. Somit kann auf aufwändige Dichtungen verzichtet werden. Des Weiteren sind keine Kupplungen notwendig und es kann auf einfache Weise garantiert werden, dass die Kühleinrichtung dauerhaft dicht bleibt.

Zudem ist die Kühleinrichtung derart in der Aussparung angeordnet, dass sich in einem Zwischenraum zwischen der Kühleinrichtung und der Aussparung ein Luftspalt ausbildet, wobei im Betrieb der elektrischen Maschine im Rotor in Folge von Verlusten erzeugte Wärme an die Welle übertragen wird und von der Welle an die Kühleinrichtung über den Luftspalt übertragen wird. Dabei kann die Kühleinrichtung derart in der Aussparung der Welle angeordnet sein, dass sich entlang des Umfangs der Kühleinrichtung zwischen der Außenfläche der Kühleinrichtung und der Aussparung ein gleichmäßiger Luftspalt ausbildet. Durch den Luftspalt kann eine mechanische Verbindung zwischen der Kühleinrichtung und der Motorwelle verhindert werden. Die Aussparung und die Kühleinrichtung sind dabei insbesondere so ausgebildet, dass er Luftspalt in radialer Richtung der Welle eine möglichst geringe Erstreckung aufweist. Somit kann die Wärme von der Welle besonders effektiv an die Kühleinrichtung übertragen werden.

In einer Ausführungsform ist die Aussparung als Bohrung ausgebildet, die von einer ersten Stirnseite der Welle in diese eingebracht ist. Eine derartige Bohrung kann einfach in die Welle eingebracht werden. Die Bohrung ist insbesondere mittig in die Welle eingebracht. Die Bohrung kann als Durchgangsbohrung ausgebildet sein. Insbesondere ist die Bohrung als Sacklochbohrung ausgebildet. In diesem Fall ist die Kühleinrichtung bevorzugt zylinderförmig bzw. rohrförmig ausgebildet. Somit kann auf einfache und kostengünstige Weise eine entsprechende Kühleinrichtung für eine Welle einer elektrischen Maschine bereitgestellt werden.

In einer weiteren Ausgestaltung weist die elektrische Maschine eine Lagereinrichtung auf, mit der die Kühleinrichtung gegenüber der Aussparung direkt gelagert ist. Um eine exakte Positionierung der Kühleinrichtung in der Aussparung der Welle zu ermöglichen, kann zwischen der Aussparung der Welle und der Kühleinrichtung zumindest eine Lagereinrichtung vorgesehen sein. Hierzu weist die Kühleinrichtung bevorzugt einen gesonderten Bereich, beispielsweise in Form eines Vorsprungs oder einer Aussparung auf, in dem die zumindest eine Lagereinrichtung angeordnet ist. Die Lagereinrichtung kann als Kugellager, als Gleitlager oder dergleichen ausgebildet sein. Somit kann auf einfache Weise eine entsprechende Abstützung und Führung der Kühleinrichtung bezüglich der Welle im Betrieb der elektrischen Maschine garantiert werden.

Erfindungsgemäß ist die Kühleinrichtung zum Durchströmen mit einem Kühlmedium ausgebildet. Das Kühlmedium kann hierbei Luft sein. Ebenso kann eine entsprechende Kühlflüssigkeit verwendet werden. Zu diesem Zweck kann die Kühleinrichtung mit einer externen Kühlvorrichtung oder einer Kühlvorrichtung der elektrischen Maschine gekoppelt sein. Somit kann auf besonders einfache und effektive Weise die von der Welle an die Kühleinrichtung übertragene Wärme durch das Kühlmedium abtransportiert werden.

In einer Ausführungsform umfasst die Kühleinrichtung eine Zuflusseinheit zum Zuführen des Kühlmediums und eine Abflusseinheit zum Abführen des Kühlmediums, wobei die Abflusseinheit derart angeordnet ist, dass sie die Zuflusseinheit umfangseitig umgibt. Die Kühleinrichtung, die bevorzugt zylinderförmig bzw. rohrförmig ausgebildet ist, umfasst einen entsprechenden Zufluss und einen Abfluss für das Kühlmedium. Dazu kann die Kühleinrichtung als Hohlzylinder ausgebildet sein, wobei sich im Inneren des Hohlzylinders ein zweiter, konzentrisch angeordneter Hohlzylinder befindet, der als Zuflusseinheit für das Kühlmedium dient. Der Zwischenraum zwischen den konzentrisch angeordneten Hohlzylindern dient in diesem Fall als Abflusseinheit für das Kühlmedium. Somit kann auf einfache Weise ein Zufluss und ein Abfluss für das Kühlmedium geschaffen werden. Des Weiteren kann eine gleichmäßige Kühlung über die komplette Außenfläche der Kühleinrichtung ermöglicht werden.

Bevorzugt sind die Zuflusseinheit und die Abflusseinheit an einem einer der ersten Stirnseite gegenüberliegenden, zweiten Stirnseite der Welle zugeordneten Bereich der Kühleinrichtung fluidisch verbunden. Die zweite Stirnseite ist insbesondere dem freien Ende der Welle zugeordnet. Durch diese Verbindung kann auf einfache Weise ein entsprechender Kühlkreislauf hergestellt werden. Zu diesem Zweck kann ein entsprechender Durchbruch bzw. Übergang von der Zuflusseinheit zu der Abflusseinheit, vorgesehen sein, durch den das Kühlmedium strömen kann.

Die erfindungsgemäße Maschinenanordnung umfasst die zuvor beschriebene elektrische Maschine und eine Kühlvorrichtung, wobei die Kühleinrichtung der elektrischen Maschine mit einem Kühlmittelkreislauf der Kühlvorrichtung fluidisch verbunden ist. Dabei kann die Kühleinrichtung der elektrischen Maschine mit einer externen Kühlvorrichtung verbunden sein, die als Flüssigkeits- oder als Luftkühler ausgebildet ist. Die Rücckühlung des Kühlmediums kann an einem separaten Kühler erfolgen. Bevorzugt ist die Kühleinrichtung der elektrischen Maschine mit der Kühlvorrichtung mechanisch verbunden. Somit kann die Kühlvorrichtung auf einfache Weise mit einer bereits vorhandenen Kühlvorrichtung gekoppelt werden. Wenn die elektrische Maschine beispielsweise in einem Elektrofahrzeug eingesetzt wird, kann die Kühleinrichtung mit einer Kühlvorrichtung des Elektrofahrzeugs verbunden werden. Ebenso ist es denkbar, dass die Kühleinrichtung mit einer Kühlvorrichtung der elektrischen Maschine verbunden wird.

Bevorzugt umfasst die Kühlvorrichtung eine Pumpe zum Bewegen des Kühlmediums in dem Kühlkreislauf. Durch eine entsprechende Pumpe kann das Kühlmedium auf einfache Weise transportiert werden.

In einer weiteren Ausgestaltung bilden die Kühlvorrichtung und die Kühleinrichtung eine Thermosiphonkühlung. In dieser Ausführungsform wird das Kühlmedium infolge der Dichteunterschiede durch die Schwerkraft transportiert. Somit kann die Maschinenanordnung besonders energieeffizient gekühlt werden. Zudem zeichnet sich die Maschinenanordnung durch ein komplett geschlossenes Kühlsystem aus. Somit kann eine elektrische Maschine mit einer hohen Schutzart bereitgestellt werden.

Die zuvor im Zusammenhang mit der erfindungsgemäßen elektrischen Maschine beschriebenen Vorteile und Weiterbildungen können in gleicher Weise für die erfindungsgemäße Maschinenanordnung übertragen werden.

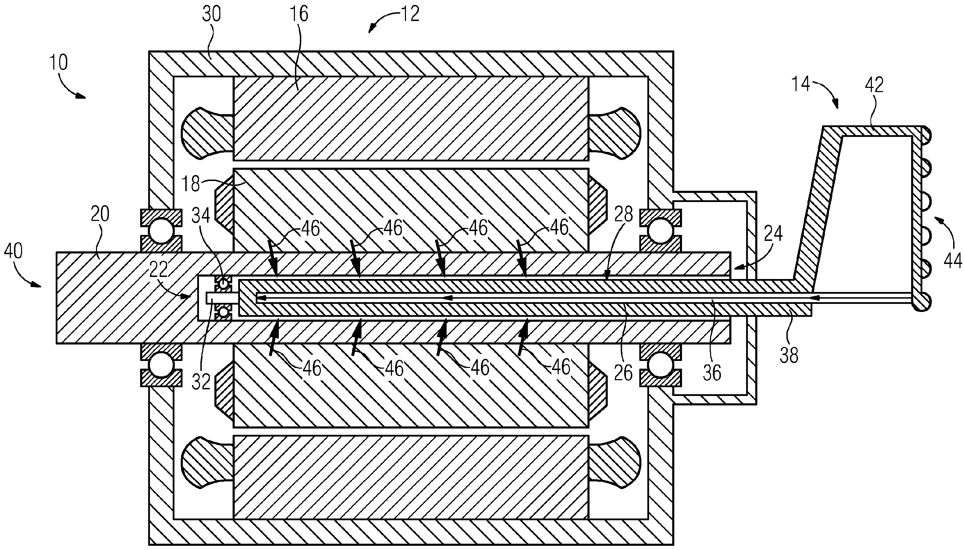

Die Erfindung wird nun anhand der beigefügten Zeichnung näher erläutert. Dabei zeigt die Figur eine Maschinenanordnung in einer geschnittenen Seitenansicht.

Das nachfolgend näher geschilderte Ausführungsbeispiel stellt eine bevorzugte Ausführungsform der vorliegenden Erfindung dar.

Die Figur zeigt eine Maschinenanordnung 10 in einer geschnittenen Seitenansicht. Die Maschinenanordnung 10 umfasst eine elektrische Maschine 12 und eine Kühlvorrichtung 14, die nachfolgend näher beschrieben werden.

Die Maschinenanordnung 10 kann beispielsweise in einem Elektrofahrzeug zum Antrieb eines oder mehrerer Antriebsräder angeordnet sein. Dabei kann die Kühlvorrichtung 14 einem Kühlkreislauf des Elektrofahrzeugs zugeordnet sein. Die Kühlvorrichtung 14 kann auch einem Kühlkreislauf der elektrischen Maschine 12 zugeordnet sein.

Die elektrische Maschine 12 umfasst einen Stator 16 und einen Rotor 18. Der Rotor 18 ist mit einer Welle 20 mechanisch verbunden. Dabei umfasst die Welle 20 eine Aussparung 22. Die Aussparung 22 ist bevorzugt als Bohrung von einer ersten Stirnseite 24 der Welle 20 in diese eingebracht ist. Dabei ist die Aussparung 22 als Sacklochbohrung ausgebildet, die mittig in die Welle 20 eingebracht ist.

In der Aussparung 22 der Welle 20 ist eine Kühleinrichtung 26 angeordnet. Die Kühleinrichtung 26 ist dabei derart in der Aussparung 22 angeordnet, dass sich in einem Zwischenraum zwischen der Aussparung 22 und der Kühleinrichtung 26 ein gleichmäßiger Luftspalt 28 ausbildet. Die Kühleinrichtung 26 ist bevorzugt so ausgebildet bzw. angeordnet, dass sie sich über die komplette axiale Ausdehnung des Rotors 18 erstreckt. Des Weiteren ist die Welle 20 drehbar zu der Kühleinrichtung 26 ausgebildet. Zu diesem Zweck kann die Kühleinrichtung 26 mit der Kühlvorrichtung 14 mechanisch verbunden sein. Ebenso kann die Kühleinrichtung 26 mit dem Gehäuse 30 der elektrischen Maschine 12 oder einem entsprechenden Anbauteil des Gehäuses 30 verbunden sein.

Die Kühleinrichtung 26 weist einen Vorsprung 32 auf, zwischen dem und der Welle 20 eine Lagereinrichtung 34 angeordnet ist. Die Lagereinrichtung 34 kann als Kugellager, als Gleitlager oder dergleichen ausgebildet sein. Durch die Lagereinrichtung 34 kann die Kühleinrichtung 26 exakt in der Aussparung 22 der Welle 20 positioniert werden. Zudem ist die Kühleinrichtung 26 über die Lagereinrichtung 34 entsprechend gegenüber der Welle 20 abgestützt.

Die Kühleinrichtung 26 ist bevorzugt zylinderförmig bzw. rohrförmig ausgebildet. Die Kühleinrichtung 26 umfasst eine Zuflusseinheit 36 und eine Abflusseinheit 38. Die Kühleinrichtung 26 kann hohlzylinderförmig ausgebildet sein. Im Innenraum dieses Hohlzylinders ist ein zusätzlicher Hohlzylinder bzw. ein Rohr angeordnet, das die Zuflusseinheit 36 bildet. Der Zwischenraum zwischen der äußeren Wandung der Zuflusseinheit 36 und der inneren Wandung der Kühleinrichtung 26 bilden die Abflusseinheit 38. Um einen Kühlmittelfluss zu gewährleisten, ist die Zuflusseinheit 36 bevorzugt an einem der zweiten Stirnseite 40 der Welle 20 zugeordneten Bereich der Kühleinrichtung 26 fluidisch mit der Abflusseinheit 38 verbunden.

Die Zuflusseinheit 36 und die Abflusseinheit 38 der Kühleinrichtung 26 sind mit einem Kühlmittelkreislauf 42 der Kühlvorrichtung 14 verbunden. Der Kühlmittelkreislauf 42 der Kühlvorrichtung 14 ist dabei mit einem zusätzlichen Kühler 44 verbunden, über den die Wärme abtransportiert werden kann.

Im Betrieb der elektrischen Maschine 12 erwärmt sich der Rotor 18 in Folge von Verlusten. Die in dem Rotor 18 erzeugte Wärme wird an die Welle 20 übertragen. Von der Welle 20 wird die Wärme über den Luftspalt 28 an die Kühleinrichtung 26 übertragen. Der Wärmefluss von dem Rotor 18 zu der Kühleinrichtung 26 ist in der Figur schematisch durch die Pfeile 46 dargestellt. Die in die Kühleinrichtung 26 transportierte Wärmeenergie wird über die Abflusseinheit 38 an den Kühlmittelkreislauf 42 der Kühlvorrichtung 14 übertragen. In der Kühlvorrichtung 14 wird das erwärmte Kühlmedium durch den Kühler 44 abgekühlt. Das abgekühlte Kühlmedium strömt von dem Kühlmittelkreislauf 42 in die Zuflusseinheit 36 der Kühleinrichtung 26. Von der Zuflusseinheit 36 strömt das Kühlmedium wieder in die Abflusseinheit 38 um die dort vorhandene Wärme abzutransportieren.

## Patentansprüche

1. Elektrische Maschine (12) mit
- einem Stator (16),
- einem Rotor (18) und
- einer Welle (20), die mit dem Rotor (18) mechanisch verbunden ist, wobei
- die Welle (20) eine Kühleinrichtung (26) aufweist, wobei
- die Welle (20) eine Aussparung (22) aufweist, in die die Kühleinrichtung (26) zumindest bereichsweise eingebracht ist, wobei die Welle (20) drehbar zu der Kühleinrichtung (26) ausgebildet ist, wobei die Kühleinrichtung (26) zum Durchströmen mit einem Kühlmedium ausgebildet ist,
**dadurch gekennzeichnet, dass**
- die Kühleinrichtung (26) derart in der Aussparung (22) angeordnet ist, dass sich in einem Zwischenraum zwischen der Kühleinrichtung (26) und der Aussparung (22) ein Luftspalt (28) ausbildet, wobei im Betrieb der elektrischen Maschine (12) im Rotor (18) in Folge von Verlusten erzeugte Wärme an die Welle (20) übertragen wird und von der Welle (20) an die Kühleinrichtung (26) über den Luftspalt (28) übertragen wird.

2. Elektrische Maschine (12) nach Anspruch 1, **dadurch gekennzeichnet, dass** die Aussparung (22) als Bohrung ausgebildet ist, die von einer ersten Stirnseite (24) der Welle (20) in diese eingebracht ist.

3. Elektrische Maschine (12) nach einem der vorhergehenden Ansprüche, **dadurch gekennzeichnet, dass** die elektrische Maschine (12) eine Lagereinrichtung (34) aufweist, mit der die Kühleinrichtung (26) direkt gegenüber der Welle (20) gelagert ist.

4. Elektrische Maschine (12) nach Anspruch 1, **dadurch gekennzeichnet, dass** die Kühleinrichtung (26) eine Zuflusseinheit (36) zum Zuführen des Kühlmediums und eine Abflusseinheit (38) zum Abführen des Kühlmediums umfasst, wobei die Abflusseinheit (38) derart angeordnet ist, dass sie die Zuflusseinheit (36) umfangsseitig umgibt.

5. Elektrische Maschine (12) nach Anspruch 4 und Anspruch 2, **dadurch gekennzeichnet, dass** die Zuflusseinheit (36) und die Abflusseinheit (38) an einem einer der ersten Stirnseite (24) gegenüberliegenden, zweiten Stirnseite (40) der Welle (20) zugeordneten Bereich der Kühleinrichtung (26) fluidisch verbunden sind.

6. Maschinenanordnung (10) mit
- einer elektrischen Maschine (12) nach einem der vorhergehenden Ansprüche und
- einer Kühlvorrichtung (14), wobei
- die Kühleinrichtung (26) der elektrischen Maschine (12) mit einem Kühlmittelkreislauf (42) der Kühlvorrichtung (14) fluidisch verbunden ist.

7. Maschinenanordnung (10) nach Anspruch 6, **dadurch gekennzeichnet, dass** die Kühlvorrichtung (14) eine Pumpe zum Bewegen des Kühlmediums in dem Kühlmittelkreislauf (42) umfasst.

8. Maschinenanordnung (10) nach Anspruch 6 mit einer elektrischen Maschine (12) nach einem der Ansprüche 1 bis 3, **dadurch gekennzeichnet, dass** die Kühlvorrichtung (14) und die Kühleinrichtung (26) eine Thermosiphonkühlung bilden.

## Claims

1. Electrical machine (12) with
- a stator (16),
- a rotor (18) and
- a shaft (20), which is mechanically joined to the rotor (18), wherein
- the shaft (20) has a cooling device (26), wherein
the shaft (20) has a recess (22), into at least some regions of which the cooling device (26) is inserted, wherein the shaft (20) is constructed so that it can rotate relative to the cooling device (26), wherein the cooling device (26) is constructed for a coolant to flow through it, **characterised in that**
the cooling device (26) is arranged in the recess (22) in such a way that an air gap (28) is formed in a space between the cooling device (26) and the recess (22), wherein, when the electrical machine (12) is in operation, heat generated in the rotor (18) due to losses is transmitted to the shaft (20) and from the shaft (20) to the cooling device (26) across the air gap (28).

2. Electrical machine (12) according to claim 1, **characterised in that** the recess (22) is constructed as a bored hole which is produced in the shaft (20) from a first face (24) of the latter.

3. Electrical machine (12) according to one of the preceding claims, **characterised in that** the electrical machine (12) has a bearing device (34) by which the cooling device (26) is directly supported relative to the shaft (20).

4. Electrical machine (12) according to claim 1, **characterised in that** the cooling device (26) incorporates an inlet unit (36) for feeding in the coolant and an outlet unit (38) for drawing off the coolant, wherein the outlet unit (38) is arranged in such a way that it surrounds the outer perimeter of the inlet unit (36).

5. Electrical machine (12) according to claim 4 and claim 2, **characterised in that** the inlet unit (36) and the outlet unit (38) have a fluid-transmitting connection on a region of the cooling device (26) associated with a second face (40) of the shaft (20), said second face being opposite its first face (24).

6. Machine arrangement (10) with
- an electrical machine (12) according to one of the preceding claims and
- a cooling facility (14), wherein
- the cooling device (26) for the electrical machine (12) has a fluid-transmitting connection with a coolant circuit (42) of the cooling facility (14).

7. Machine arrangement (10) according to claim 6, **characterised in that** the cooling facility (14) incorporates a pump for moving the coolant in the coolant circuit (42).

8. Machine arrangement (10) according to claim 6 with an electrical machine (12) according to one of claims 1 to 3, **characterised in that** the cooling facility (14) and the cooling device (26) form a thermo-symphonic cooler.

## Revendications

1. Machine (12) électrique comprenant
- un stator (16),
- un rotor (18) et
- un arbre (20), qui est relié mécaniquement au rotor (18), dans laquelle
l'arbre a un dispositif (26) de refroidissement, dans laquelle l'arbre a un évidement (22), dans lequel le dispositif (26) de refroidissement est introduit au moins en partie, l'arbre (20) étant constitué tournant par rapport au dispositif (26) de refroidissement, le dispositif (26) de refroidissement étant constitué pour être parcouru par un fluide de refroidissement,
**caractérisée en ce que**
- le dispositif (26) de refroidissement est disposé dans l'évidement (22) de manière à constituer un entrefer (28) dans un espace intermédiaire entre le dispositif (26) de refroidissement et l'évidement (22), dans laquelle, lorsque la machine (12) électrique est en fonctionnement, de la chaleur produite dans le rotor (18) en raison de pertes est transmise à l'arbre (20) et de l'arbre (20) au dispositif (26) de refroidissement par l'entrefer (28).

2. Machine (12) électrique suivant la revendication 1, **caractérisée en ce que** l'évidement (22) est constitué sous la forme d'un trou, qui est ménagé dans l'arbre (20) d'un premier côté (24) frontal de celui-ci.

3. Machine (12) électrique suivant l'une des revendications précédentes, **caractérisée en ce que** la machine (12) électrique a un dispositif (34) de palier, par lequel le dispositif (26) de refroidissement est monté directement en face de l'arbre (20).

4. Machine (12) électrique suivant la revendication 1, **caractérisée en ce que** le dispositif (26) de refroidissement comprend une unité (36) d'arrivée pour l'arrivée du fluide de refroidissement et une unité (38) d'évacuation pour l'évacuation du fluide de refroidissement, l'unité (38) d'évacuation étant disposée de manière à entourer du côté du pourtour l'unité (36) d'arrivée.

5. Machine (12) électrique suivant la revendication 4 et la revendication 2, **caractérisée en ce que** l'unité (36) d'arrivée et l'unité (38) d'évacuation communiquent fluidiquement sur une partie du dispositif (26) de refroidissement opposée à un premier côté (24) frontal et associée à un deuxième côté (40) frontal de l'arbre (20) .

6. Agencement (10) de machine comprenant
- une machine (12) électrique suivant l'une des revendications précédentes et
- un système (14) de refroidissement, dans lequel
- le dispositif (26) de refroidissement de la machine (12) électrique communique fluidiquement avec un circuit (42) de fluide de refroidissement du système (14) de refroidissement.

7. Agencement (10) de machine suivant la revendication 6, **caractérisé en ce que** le système (14) de refroidissement comprend une pompe pour véhiculer le fluide de refroidissement dans le circuit (42) de fluide de refroidissement.

8. Agencement (10) de machine suivant la revendication 6, comprenant une machine (12) électrique suivant l'une des revendications 1 à 3,
**caractérisé en ce que** le système (14) de refroidissement et le dispositif (26) de refroidissement forment un refroidissement à thermosiphon.
